(19) **Europäisches Patentamt / European Patent Office / Office européen des brevets**

(11) **EP 2 481 713 B1**

(12) **EUROPÄISCHE PATENTSCHRIFT**

(45) Veröffentlichungstag und Bekanntmachung des Hinweises auf die Patenterteilung:
**19.03.2014 Patentblatt 2014/12**

(51) Int Cl.:
***C02F 1/42*** *(2006.01)*

(21) Anmeldenummer: **12000517.8**

(22) Anmeldetag: **26.01.2012**

(54) **Verfahren zum Betrieb einer Wasserenthärtungsanlage und Wasserenthärtungsanlage zur Durchführung des Verfahrens**

Method for operating a water softening assembly and water softening assembly for executing the method

Procédé de fonctionnement d'une installation d'adoucissement de l'eau et installation d'adoucissement de l'eau pour sa mise en oeuvre

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2011 DE 102011003326**

(43) Veröffentlichungstag der Anmeldung:
**01.08.2012 Patentblatt 2012/31**

(73) Patentinhaber: **Judo Wasseraufbereitung GmbH 71364 Winnenden (DE)**

(72) Erfinder:
• **Dopslaff, Hartmut 71364 Winnenden (DE)**
• **Dopslaff, Carsten H. 71364 Winnenden (DE)**

(74) Vertreter: **Kohler Schmid Möbus Patentanwälte Ruppmannstraße 27 70565 Stuttgart (DE)**

(56) Entgegenhaltungen:
EP-A1- 2 228 129   EP-A2- 0 900 765
WO-A1-2010/017792   DE-B3-102008 045 354

**Beschreibung**

Hintergrund der Erfindung

Die Erfindung betrifft ein Verfahren zum Betrieb einer Wasserenthärtungsanlage mit einer Enthärtungsvorrichtung umfassend ein Ionentauschermaterial, insbesondere einem Ionentauscherharz, einer automatisch verstellbaren Verschneideeinrichtung zum Mischen eines Verschnittwasserstroms aus einem ersten, enthärteten Teilstrom $V(t)_{teil1welch}$ und einem zweiten, rohwasserführenden Teilstrom $V(t)_{teil2roh}$, einem ersten Leitfähigkeitssensor im Rohwasserbereich, einem zweiten Leitfähigkeitssensor im Bereich des enthärteten Wassers, und einer elektronischen Steuereinrichtung, wobei eine automatische Steuerung der Regeneration oder Signalisierung der Erschöpfung des Ionentauschermaterials und/oder automatische Steuerung der Verschneideeinrichtung erfolgt. Die Erfindung betrifft auch eine Wasserenthärtungsanlage zur Durchführung des Verfahrens.

Stand der Technik:

Zur Steuerung der Verschneideeinrichtung werden in DE 10 2007 059 058 B3 eine Gesamthärte II des Rohwassers, die aus der gemessenen Leitfähigkeit des Rohwassers mittels einer Kalibrierkennlinie (F2) abgeleitet wird, sowie die Teilströme $V(t)_{teil1welch}$ und $V(t)_{teil2roh}$ verwendet. Die Wasserqualität des enthärteten Teilstroms $V(t)_{teil1weich}$ wird nicht bestimmt. Vielmehr wird davon ausgegangen, dass die Wasserhärte des enthärteten Wassers stets 0°dH beträgt. Abweichungen hiervon führen zu Änderungen bei der Verschnittwasserhärte.

Die Auslösung des Regeneriervorgangs erfolgt in DE 10 2007 059 058 B3 anhand einer Gesamthärte I des Rohwassers, die aus der gemessenen Leitfähigkeit des Rohwassers mittels einer Kalibrierkennlinie (F1) abgeleitet wird, anhand der durch das Ionenaustauscherharz geflossenen Rohwassermenge (also der Weichwassermenge des integralen Teilstroms $V(t)_{teil1weich}$) und anhand einer abgespeicherten Kapazität des Ionenaustauscherharzes. Auch hier wird die Weichwasserqualität nicht bestimmt. Ist eine vorherige Regeneration mangelhaft, beispielsweise durch eine zu geringe Konzentration oder Einwirkzeit der Regeneriermittellösung, so sinkt die tatsächliche Kapazität des Ionenaustauscherharzes und der Zeitpunkt der Regenerationsauslösung ist nicht korrekt.

In der in EP 0 900 765 A2 offenbarten Vorrichtung sind Leitfähigkeitssensoren im Roh- und Reinwasserbereich sowie in der Ionenaustauscherschüttung angeordnet. Die Regenerationssteuerung für den Ionentauscher basiert auf einem überwachten Beladungsgrad des Ionentauschers, ermittelt aus der Leitfähigkeit des Ionentauschers, wobei die Leitfähigkeit des Rohwassers oder alternativ die Leitfähigkeit des Reinwassers als Korrektur berücksichtigt wird. Die Verschneidesteuerung wertet die Roh- und die Reinwasserhärte aus. Die Ermittlung der Rohwasserhärte erfolgt über eine beobachtete Änderung des Beladungsgrades des Ionenaustauschers in Korrelation zur Durchflussmenge an Rohwasser. Die Reinwasserhärte wird aus dem Beladungsgrad des Ionenaustauschers und der Rohwasserhärte bestimmt. Nachteilig sind hier die große Anzahl von benötigten Elektroden, der aufwändige und somit teure Aufbau sowie mögliche Messungenauigkeiten durch inhomogene Bereiche in der Ionenaustauscherschüttung.

DE 102009047254 (unveröffentlicht) beschreibt eine Wasserbehandlungsanlage mit einem Leitfähigkeitssensor zur Bestimmung der Leitfähigkeit L2 von behandeltem oder teilbehandeltem Wasser. Eine Erschöpfung der Wasserbehandlungselemente (und damit der Beginn einer Regeneration) wird signalisiert, wenn eine Abweichung der Leitfähigkeit L2 von einem vorgegebenen Sollwert SW einen Grenzwert GW2 überschreitet. Im Falle einer Entsalzung ist dies besonders einfach, weil die Leitfähigkeit des behandelten Wassers unabhängig von der Rohwasserqualität (näherungsweise) 0 µS/cm beträgt. Bei einer Enthärtung besteht jedoch die Schwierigkeit, dass die Leitfähigkeit des behandelten Wassers und damit der Sollwert SW von der Rohwasserqualität abhängt. Dies wird durch Bestimmung der Leitfähigkeit L1 des unbehandelten Wassers berücksichtigt. Es ist allerdings nicht im Detail offenbart, wie sich der Sollwert SW aus der Leitfähigkeit L1 ableiten lässt, insbesondere ist der Faktor FK, welche die Änderung der Leitfähigkeit des unbehandelten Wassers bei der Enthärtung beschreibt, nicht näher definiert. Ebenso wird der Grenzwert GW2 nicht genau quantifiziert.

Aufgabe der Erfindung

Es ist Aufgabe der vorliegenden Erfindung, ein kostengünstiges Verfahren zum Betrieb einer Wasserenthärtungsanlage, sowie eine Wasserenthärtungsanlage vorzustellen, wobei die Einstellung der Verschnittwasserhärte mit hoher Genauigkeit möglich ist und die Kapazität des Ionentauschermaterials optimal ausgenutzt wird.

Kurze Beschreibung der Erfindung

Diese Aufgabe wird erfindungsgemäß durch ein Verfahren gemäß Patentanspruch 1 bzw. durch eine Wasserenthärtungsanlage gemäß Patentanspruch 8 gelöst.

Das erfindungsgemäße Verfahren weist folgende Schritte auf:

- Bestimmung der elektrischen Leitähigkeit $LF_{roh}$ des Rohwassers mittels des ersten Leitfähigkeitssensors (11);
- Bestimmung einer Gesamthärte $G_{LF,roh}$ des Rohwassers aus der elektrischen Leitfähigkeit $LF_{roh}$ des Rohwassers mit einer in der elektronischen Steuereinrichtung (18) hinterlegten ersten Kalibrierkennlinie ($K_{roh}$),
- Bestimmung der elektrischen Leitfähigkeit $LF_{weich}$ des enthärteten Wassers mittels des zweiten Leitfähigkeitssensors (12),
- Bestimmung einer Gesamthärte $G_{LF,weich}$ des enthärteten Wassers aus der elektrischen Leitfähigkeit $LF_{weich}$ des enthärteten Wassers mit einer in der elektronischen Steuereinrichtung (18) hinterlegten zweiten Kalibrierkennlinie ($K_{weich}$) gemäß

$$G_{LF,weich} = G_{LF,roh} - \frac{G_{LF,roh}}{LF_{weich,0} - LF_{roh}} \bullet (LF_{weich} - LF_{roh}),$$

wobei $LF_{weich,0}$ die Leitfähigkeit im Bereich des enthärteten Wassers bei vollständiger Enthärtung ist,
- automatische Steuerung der Regeneration oder automatische Signalisierung der Erschöpfung des Ionentauschermaterials (5) und/oder automatische Steuerung der Verschneideeinrichtung (9) in Abhängigkeit der so bestimmten Gesamthärte $G_{LF,weich}$ des enthärteten Wassers, wobei bei der Steuerung der Verschneideeinrichtung die Teilströme $V(t)_{teil1weich}$, $V(t)_{teil2roh}$ in Abhängigkeit der Gesamthärten $G_{LF,roh}$, $G_{LF,weich}$ des Rohwassers und des enthärteten Wassers eingestellt werden, so dass die Wasserhärte im Verschnittwasserstrom $V(t)_{verschnitt}$ einen vorgegebenen Sollwert (SW) erreicht, wobei für die erste Kalibrierkennlinie ($K_{roh}$) gilt: $G_{LF,roh} = LF_{roh}/UFK$, und wobei ein Umrechnungsfaktor UFK von 35-44 $\mu$S/cm pro °dH, insbesondere 38-41 $\mu$S/cm pro °dH verwendet wird.

Bei der Enthärtung steigt die Leltfähigkeit des Wassers durch Austausch von Calcium- oder Magnesium-Ionen gegen jeweils zwei Natrium-Ionen. Die Leitfähigkeit erreicht ihr Maximum $LF_{weich,0}$, wenn alle Härtebildner ausgetauscht wurden, d.h. bei 0°dH.

Für die belden Grenzfalle der vollständigen Enthärtung und der vollständigen Erschöpfung des Ionentauscher-materials gilt:

Vollständige Enthärtung:

$LE_{weich}$ ist maximal, d.h. $LF_{weich} = LF_{weich,0}$, und damit:

$(LF_{weich} - LF_{roh}) = (LF_{weich,0} - LF_{roh})$, woraus folgt $G_{LF,weich} = G_{LF,roh} - G_{LF,roh} = 0°dH$

Keine Enthärtung (vollständig erschöpftes Ionentauschermaterial):

$LF_{weich}$ ist minimal, d.h. $LF_{weich} = LF_{roh}$, und damit:

$(LF_{weich} - LF_{roh}) = 0$, woraus folgt $G_{LF,weich} = G_{LF,roh}$

Die Steuerung der Regeneration bzw. Signalisierung der Erschöpfung gemäß des erfindungsgemäßen Verfahrens ist verglichen mit den aus dem Stand der Technik bekannten Verfahren genauer, weil berücksichtigt wird, dass die Weichwasserhärte nicht immer 0°dH beträgt; z.B. bei vorhandener Resthärte im Weichwasserbereich durch Schlupf bei Inhomogenitäten im Ionenaustauscherharz, bei zu hohem Volumenstrom oder bei beginnender Erschöpfung des Harzes).

Mit dem erfindungsgemäßen Verfahren ist eine bessere Kapazitätsausnutzung des Ionentauschematerials möglich, weil eine beginnende Erschöpfung des Ionentauschermaterials erkannt wird. Die Einstellung der Verschneideeinrichtung kann entsprechend angepasst werden, so dass das Verhältnis der Menge des Weichwassers zur Menge des Rohwassers bei der Verschneidung erhöht wird, wenn das Weichwasser nicht mehr vollständig enthärtet wird.

Als Ionentauschermatetial kann entweder ein regenerierbarer Enthärter oder ein Einweg-Enthärter verwendet werden. Im Falle eines regenerierbaren Enthärters ist ein Vorratsgefäß für die Bereitstellung einer Regeneriermittellösung zum Regenerieren des Ionentauschermaterials vorgesehen. Einweg-Enthärter müssen nach Erschöpfung ausgetauscht werden.

Vorzugsweise wird zur Bestimmung der Leitfähigkeit $LF_{weich,0}$ des vollständig enthärteten Wassers die elektrische Leitfähigkeit $LF_{weich}$ des enthärteten Wassers nach einer Regeneration oder nach einem Austausch des Ionentauschermaterials zu einem Zeitpunkt gemessen, zu dem die volle Kapazität des Ionentauschermaterials zur Verfügung steht. Diese gemessene Leitfähigkeit $LF_{weich}$ wird als Leitfähigkeit $LF_{weich,0}$ des vollständig enthärteten Wassers definiert. Die Gesamthärte des enthärteten Wassers beträgt dann (näherungsweise) 0°dH und die Leitfähigkeit erreicht ihr Maximum. Um einen Schlupf von Härtebildnern zu vermeiden, ist der Nenndurchfluss der Wasserenthärtungsanlage zu beachten. Die volle Kapazität des Ionentauschermaterials steht kurz nach der Regeneration bzw. dem Austausch des Ionentauschermaterials zur Verfügung. Der genaue Zeitpunkt, an dem nach der Regeneration die wolle Kapazität zur Verfügung steht, ist abhängig vom Gerätetyp, von der Größe und Geometrie des Ionentauschermaterials und der Durchflussgeschwindigkeit.

Für den Fall, dass der genaue Zeitpunkt, an dem die volle Kapazität des Ionentauschermaterials erreicht ist, nicht bekannt ist, kann zur Bestimmung der Leitfähigkeit $LF_{weich,0}$ des vollständig enthärteten Wassers in einem vorgegebenen Zeitraum eine Vielzahl von Werten für die elektrische Leitfähigkeit $LF_{weich}$ des enthärteten Wassers gemessen werden, wobei die Werte in einem Speicher der elektronischen Steuereinrichtung abgespeichert werden, und als Leitfähigkeit $LF_{weich,0}$ des vollständig enthärteten Wassers das Maximum der abgespeicherten Werte definiert wird. Die Bestimmung von $LF_{weich,0}$ ist in diesem Fall besonders einfach und genau.

Das Verfahren sieht vor, dass bei der Steuerung der Verschneideeinrichtung die Teilströme ($V(t)_{teil2roh}$, $V(t)_{teil1weich}$) in Abhängigkeit der Gesamthärten $G_{LF,roh}$, $G_{LF,weich}$ des Rohwassers und des enthärteten Wassers eingestellt werden, so dass die Wasserhärte im Verschnittwasserstrom $V(t)_{verschnitt}$ einen vorgegebenen Sollwert (SW) erreicht, wobei für die erste Kalibrierkennlinie gilt: $G_{LF,roh} = LF_{roh}/UFK$, und wobei ein Umrechnungsfaktor UFK von 35-44 $\mu$S/cm pro °dH, insbesondere 38-41 $\mu$S/cm pro °dH verwendet wird.

Die aus der ersten Kalibrierkennlinie bestimmte Rohwasserhärte $G_{LF,roh}$ ergibt sich aus einem Datensatz vieler Wasseranalysen als mittlerer Wert aller bei dieser Leitfähigkeit vorkommenden Wasserhärten. Die beiden Gesamthärten $G_{LF,roh}$ und $G_{LF,weich}$ sind einfach und schnell bestimmbar. Die Einstellung der Verschnittwasserhärte ist durch die Berücksichtigung der beiden Gesamthärten $G_{LF,roh}$ und $G_{LF,weich}$ bei Einstellung der Teilströme des Roh- und Weichwassers besonders genau.

In einer einfachen Variante wird auf die Anteile der beiden Teilströme am Verschnittwasser im Normalbetrieb der Wasserenthärtungsanlage über die Einstellung der Verschneidevorrichtung geschlossen. Die sich bei verschiedenen Einstellungen der Verschneidevorrichtung ergebenden Anteile der Teilströme müssen hierzu vorab bestimmt und in der elektronischen Steuereinheit hinterlegt werden.

Eine besonders genaue Einstellung der Verschnittwasserhärte auf den vorgegebenen Sollwert wird durch eine besonders bevorzugte Variante erreicht, bei der eine direkte oder indirekte Bestimmung der beiden Teilströme $V(t)_{teil1weich}$ und $V(t)_{teil2roh}$ mittels mindestens zweier Durchflussmesser erfolgt, und die Steuerung der Verschneideeinrichtung derart erfolgt, dass SW $(V(t)_{teil2roh} + V(t)_{teilweich}) = G_{LF,weich} V(t)_{teil1weich} + G_{LF,roh} V(t)_{teil2roh}$. Bei dieser Variante werden Schwankungen der Anteile der Teilströme im Verschnittwasser, die sich bei identischer Einstellung der Verschneideeinrichtung aufgrund von Schwankungen von Außenbedingungen (etwa der Druck des zulaufenden Rohwassers oder die Größe des Entnahmeflusses von Verschnittwasser) ergeben können, ausgeglichen.

Vorzugsweise wird die Regeneration des Ionentauschermaterials gestartet oder die Erschöpfung des Ionentauschermaterials signalisiert, wenn die Gesamthärte des enthärteten Wassers $G_{LF,weich}$ einen Grenzwert überschreitet. Die Gesamthärte des enthärteten Wassers $G_{LF,weich}$ wird aus den gemessenen Leitfähigkeiten $LF_{roh}$ und $LF_{weich}$ mit Hilfe der zweiten Kalibrierkennlinie bestimmt. Wird der Grenzwert trotz Beachtung des Nenndurchflusses der Wasserenthärtungsanlage überschritten, so findet keine vollständige Enthärtung mehr statt, und das Ionenaustauscherharz muss regeneriert bzw. ausgetauscht werden.

Der Grenzwert für die Gesamthärte des enthärteten Wassers $G_{LF,weich}$ liegt vorzugsweise zwischen 0°dH und 2 °dH. Je nach Anforderungen an das enthärtete Wasser ist eine Resthärte von 0°dH bis 2°dH akzeptabel. Die Weichwasserhärte kann selbst im Falle eines vollständig regenerierten Ionenaustauscherharzes größer als 0°dH sein. Dieser Schlupf von Härtebildnern entsteht beispielsweise durch Inhomogenitäten Im Ionenaustauscher oder bei sehr hohen Durchflüssen, die den Nenndurchfluss der Wasserbehandlungsanlage übersteigen.

Eine bevorzugte Variante des erfindungsgemäßen Verfahrens sieht vor, dass die Regeneration des Ionentauschermaterials gestartet oder die Erschöpfung des Ionentauschermaterials signalisiert wird, wenn die Leitfähigkeit $LF_{weich}$ des enthärteten Wassers abnimmt bei konstant bleibender Leitfähigkeit $LF_{roh}$ des Rohwassers. Bei beginnender Erschöpfung des Ionentauscherharzes nimmt die Konzentration an Calcium-und Magnesium-Ionen im enthärteten Wasser zu, während die Konzentration an Natrium-Ionen entsprechend abnimmt. Dadurch sinkt die Leitfähigkeit im enthärteten Wasser. Die Leitfähigkeit im Rohwasser bleibt bei unveränderter Zusammensetzung konstant.

Wie oben beschrieben gilt für die zweite Kalibrierkennlinie.

$$G_{LF,weich} = G_{LF,roh} - \frac{G_{LF,roh}}{LF_{weich,0} - LF_{roh}} \bullet (LF_{weich} - LF_{roh}).$$

Nimmt die Leitfähigkeit $LF_{weich}$ bei konstant bleibender Leitfähigkeit $LF_{roh}$ also ab, so wird die Differenz ($LF_{weich}$ - $LF_{roh}$) kleiner und $G_{LF,weich}$ nimmt zu. Eine Abnahme der Leitfähigkeit $LF_{weich}$ des enthärteten Wassers bei konstant bleibender Leitfähigkeit $LF_{roh}$ des Rohwassers ist daher ein Indiz für steigende Härte $G_{LF,weich}$ des Weichwassers.

Eine erfindungsgemäße Wasserenthärtungsanlage zur Durchführung des Verfahrens nach einem der vorhergehenden Ansprüche wird im Anspruch 8 definiert.

Im Falle eines regenerierbaren Ionentauschermaterials umfasst die erfindungsgemäße Wasserenthärtungsanlage zusätzlich ein Vorratsgefäß für die Bereitstellung einer Regeneriermittellösung zum Regenerieren des Ionentauschermaterials.

Vorzugsweise sind mindestens zwei Durchflussmesser zur direkten oder indirekten Bestimmung der beiden Teilströme $V(t)_{teil1weich}$ und $V(t)_{teil2roh}$ vorgesehen.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Zeichnung und detaillierte Beschreibung der Erfindung

Es zeigen:

Fig. 1    eine schematische Darstellung einer erfindungsgemäßen Wasserenthärtungsanlage zur Durchführung des erfindungsgemäßen Verfahrens mit je einem Leitfähigkeitssensor im Rohwasserbereich und im Bereich des enthärteten Wassers;

Flg. 2    eine Diagramm-Darstellung der Gesamthärte im Bereich des enthärteten Wassers in Abhängigkeit von der gemessenen Leitfähigkeit Im Bereich des enthärteten Wassers für drei verschiedene Rohwässer.

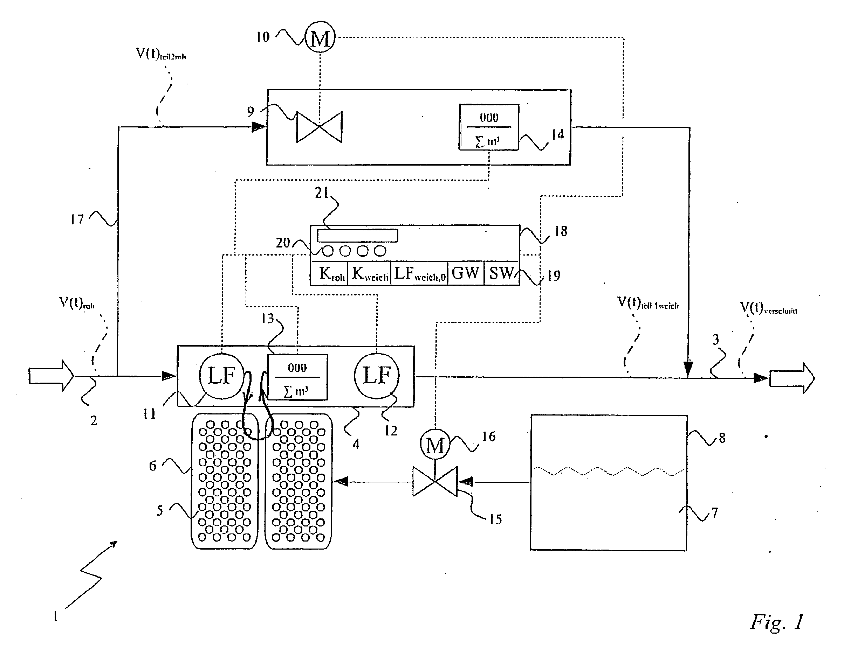

Fig.1 zeigt eine erfindungsgemäße Wasserenthärtungsanlage 1 mit einer Enthärtungsvorrichtung 6 umfassend ein regenerierbares Ionentauschermaterial 5. Für die Regeneration des Ionentauschermaterials 5 ist ein Vorratsgefäß 8 mit einer Regeneriermittellösung 7 vorgesehen, die mittels eines Stellmotors 16 dem Ionentauschermaterial 5 über ein steuerbares Ventil 15 zugeführt werden kann.

Über einen Zulauf 2 fließt der Wasserenthärtungsanlage 1 unbehandeltes Wasser (Rohwasser), etwa aus dem örtlichen Trinkwassemetz, zu. Das unbehandelte Wasser wird aufgeteilt, wobei ein zu enthärtender Teilstrom $V(t)_{teil1weich}$ durch die Enthärtungsvorrichtung 6 und ein anderer Teilstrom $V(t)_{teil2roh}$ über eine Bypassleitung 17 gleitet wird.

Ein Verschneideventil 9, das über einen Stellmotor 10 angesteuert wird, dient zum Verschneiden von Rohwasser und enthärtetem Wasser (Weichwasser). Das dadurch erzeugte Verschnittwasser fließt über einen Ablauf 3 ab und kann einem Verbraucher zugeführt werden.

In der Bypassleitung 17 passiert das Rohwasser das Verschneideventil 9 sowie einen Durchflussmesser 14 zur Messung des Rohwassertellstroms $V(t)_{teil2roh}$, Die Einstellung des Verschneideventils 9 bestimmt die Anteile von Weichwasser und Rohwasser und damit die Gesamthärte des Verschnittwassers. Zum Enthärten wird das Rohwasser über das Ionentauschermaterial 5 geleitet. Der Teilstrom $V(t)_{teil1welch}$ des so enthärteten Wassers wird mittels eines Durchflussmessers 13 gemessen. Eine elektronische Steuereinrichtung 18 empfängt Signale des Durchflussmessers 14 betreffend den Rohwasservolumenstrom $V(t)_{teil2roh}$ sowie des Durchflussmessers 13, der den Weichwasservolumenstrom $V(t)_{teil1welch}$ misst. Die Durchflussmesser 13, 14 erfassen die momentanen (zur Zeit t vorliegenden) Volumenströme und addieren mit Hilfe der elektronischen Steuervorrichtung 18 das Wasservolumen.

Mittels eines ersten Leitfähigkeitssensors 11 wird die momentane elektrische Leitfähigkeit $LF_{roh}$ des Rohwassers gemessen, wobei das Messergebnis an die elektronische Steuereinrichtung 18 weitergegeben wird. Mit einem zweiten Leitfähigkeitssensor 12 wird die momentane Leitfähigkeit $LF_{weich}$ des Weichwassers bestimmt und an die elektronische Steuereinrichtung 18 weitergeleitet. In der in Fig. 1 gezeigten beispielhaften Ausführungsform sind die Leitfähigkeitssensoren 11,12 zur Messung der Leitfähigkeit des Rohwassers und des Weichwassers, sowie ein Durchflussmesser 13, der die Menge an enthärtetem Wasser (also $V(t)_{teil1welch}$) misst, in einem Steuerkopf 4 der Enthärtungsvorrichtung positioniert. Der erste Leitfähigkeitssensor 11 ist dabei so angeordnet, dass die Messung der Leitfähigkeit vor der Enthärtung erfolgt. Alternativ dazu kann der erste Leitfähigkeitssensor 11 In der Bypassleitung 17 angeordnet sein.

Die gemessene Leitfähigkeit $LF_{roh}$ des Rohwassers wird dazu verwendet, eine Gesamthärte $G_{LF,roh}$ des Rohwassers zu bestimmen. Dies erfolgt mit Hilfe einer in der Steuereinrichtung hinterlegten ersten Kallbrierkennlinie $K_{roh}$.

Aus der elektrischen Leitfähigkeit $LF_{weich}$ des enthärteten Wassers wird erfindungsgemäß eine Gesamthärte $G_{LF,weich}$ des enthärteten Wassers bestimmt, und zwar unter Verwendung einer ebenfalls in der Steuereinrichtung hinterlegten zweiten Kalibrierkennlinie $K_{weich}$.

Die Steuerung des Verschneideventils kann erfindungsgemäß in Abhängigkeit der so ermittelten Gesamthärte $G_{LF,weich}$ des enthärteten Wassers erfolgen. Auf diese Weise kann das Mischungsverhältnis von Rohwasser und Weichwasser so angepasst werden, dass eine konstante gewünschte Gesamthärte (Sollwert SW) des Verschnittwassers gewährleistet werden kann, auch wenn das Weichwasser eine zeitlich nicht konstante Gesamthärte $G_{LF,weich}$ aufweist. So kann z.B. bei einsetzender Erschöpfung des Ionentauschermaterials 5 durch Erhöhung des Anteils des Weichwassers $V(t)_{teil1weich}$ das Verschnittwasser noch einige Zeit auf dem Sollwert SW gehalten werden. Dadurch kann die Restkapazität des Ionentauschermaterials 5 optimal ausgenutzt werden.

In Abhängigkeit von der erfindungsgemäß bestimmten Gesamthärte $G_{LF,weich}$ des Weichwasser kann auch die Regeneration des Ionentauschermaterials 5 eingeleitet werden, z.B. wenn ein festgelegter Grenzwert GW für die Gesamthärte $G_{LF,weich}$ des Weichwassers überschritten wird. Hierzu wird bei Erreichen des Erschöpfungszustandes des Ionenaustauschermaterials 5 das Ventil 15 mit Hilfe des Motors 16 derart angesteuert, dass Salzsole in die Enthärtungsvorrichtung 6 fließen kann und das Ionenaustauschermaterial 5 regeneriert wird. Die Ionenaustauschervorrichtung 6 weist vorzugsweise zwei mit Ionenaustauschermaterial 5 gefüllte Behälter auf, um einen Pendel- oder Parallelbetrieb zu ermöglichen.

Die Steuerung des Verschneideventils und/oder der Regeneration des Ionentauschermaterials erfolgt mittels der Steuereinrichtung 18. Die für die Steuerung benötigten Daten, insbesondere der Grenzwert GW für die Gesamthärte $G_{LF,weich}$ des Weichwassers, der Sollwert SW für die Gesamthärte des Verschnittwassers, sowie die beiden Kennlinien $K_{roh}$ und $K_{weich}$ können über eine Eingabevorrichtung 20 an der Steuereinrichtung 18 eingegeben und in einem Speicher 19 gespeichert werden. Die Steuereinrichtung 18 verfügt über ein Display (eine Anzeige) 21, auf welchem die gültigen Grenzwerte und/oder Messergebnisse undloder Ventileinstellungen und/oder Sollwerte dargestellt werden können.

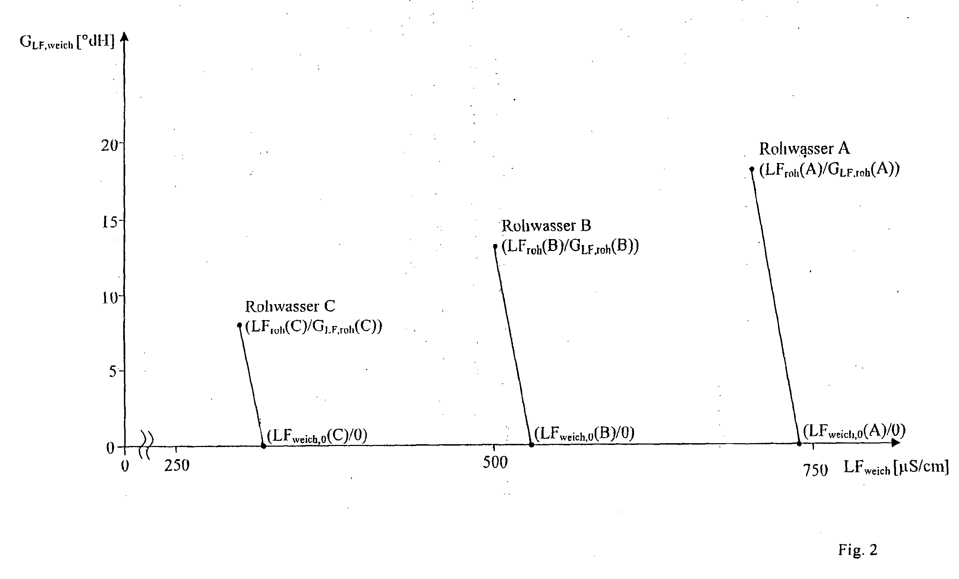

Fig. 2 zeigt, wie sich die Gesamthärte $G_{LF,weich}$ im Bereich des enthärteten Wassers in Abhängigkeit von der gemessenen Leitfähigkeit $LF_{weich}$ im Bereich des enthärteten Wassers für drei verschiedene Rohwässer A, B, C verhält. Da sich verschiedene Rohwässer in ihrem Gehalt von nicht härtebildenden Ionen und damit in ihrer Leitfähigkeit bei vollständiger Enthärtung unterscheiden, weisen verschiedene Wässer unterschiedliche Werte für $LF_{weich,0}$ auf. Es ergibt sich somit für jedes Wasser ein anderer Verlauf der zweiten Kennlinie $K_{weich}$. Fig. 2 zeigt die Verläufe der zweiten Kennlinie $K_{weich}$ für drei verschieden Rohwässer A, B, C.

Rohwasser A besitzt eine mit dem Leitfähigkeitssensor 11 bestimmte Leitfähigkeit $LF_{roh}(A)$ von 700 µS/cm. Die daraus mit der ersten Kalibrierkennlinie $K_{roh}$ abgeleitete Gesamthärte $G_{LF,roh}(A)$ beträgt 18°dH. Wird das Rohwasser A vollständig, d.h. auf 0°dH enthärtet, so steigt die Leitfähigkeit auf einen Wert $LF_{weich,0}(A)$ von 740 µS/cm. Ursache ist der Austausch der Calcium- bzw. Magnesium-Ionen gegen jeweils zwei Natrium-Ionen.

Der Wert $LF_{weich,0}$ entspricht dem maximalen, mit dem Leitfähigkeitssensor 12 bestimmten Wert für die Leitfähigkeit des Weichwassers, wenn also sämtliche Calcium- bzw: Magnesium-Ionen gegen jeweils zwei Natrium-Ionen ausgetauscht wurden und die Gesamthärte $G_{LF,weich}$ des enthärteten Wassers 0°dH beträgt.

$LF_{weich,0}$ kann kurz nach einer Regeneration bestimmt werden, wenn die volle Kapazität des Ionenaustauscherharzes zur Verfügung steht. Um einen Schlupf von Härtebildnern zu vermeiden, ist dabei zu beachten, dass der Nenndurchfluss der Wasserenthärtungsanlage nicht überschritten wird. Ebenso kann $LF_{weich,0}$ bestimmt werden, indem sämtliche mit dem Leitfähigkeitssensor 12 gemessenen Werte $LF_{weich}$ in einem Speicher der elektronischen Steuereinrichtung abgespeichert werden, wobei $LF_{weich,0}$ dem Maximum der abgespeicherte Werte entspricht.

Sinkt nun die im Bereich des enthärteten Wassers gemessene Leitfähigkeit $LF_{weich}$ aufgrund einer vorhandenen Resthärte (Schlupf von Härtebildnern durch Inhomogenitäten im Ionenaustauscherharz, Volumenströme oberhalb des Nenndurchflusses oder bei beginnender Erschöpfung des Ionenaustauscherharzes), so lässt sich die Resthärte als Gesarnthärte $G_{LF,weich}$ mit der Kalibrierkennlinie $K_{weich}$ bestimmen.

Beispiel: $LF_{weich} = 735$ µS/cm, daraus ergibt sich mit der Kalibrierkennlinie $K_{weich}$ eine Resthärte von

$$G_{LF,weich} = 18°dH - 18°dH \cdot \{(735 - 700)/(740 - 700)\} = 2{,}25°dH.$$

$G_{LF,weich}$ kann erfindungsgemäß zur Steuerung der Regeneration verwendet werden. Beispielsweise kann eine Regeneration gestartet werden, wenn $G_{LF,weich}$ einen Wert von 2°dH übersteigt.

Ebenso kann $G_{LF,weich}$ zusammen mit der Gesamthärte des Rohwassers $G_{LF,roh}$ zur Steuerung der Verschneideeinrichtung verwendet werden. Bei bekannten Gesamthärten $G_{LF,weich}$ und $G_{LF,roh}$ kann die Verschnittwasserhärte exakt auf einen vorgegebenen Sollwert SW eingestellt werden.

Für die beiden Rohwässer B und C gilt analoges.

Rohwasser B:

$LF_{roh}(B) = 500\ \mu S/cm$, $G_{LF,roh}(B) = 13°dH$

$LF_{weich,0}(B) = 530\ \mu S/cm$

Beispiel 1: $LF_{weich} = 525\ \mu S/cm$, daraus ergibt sich $G_{LF,weich} = 2,16°dH$

Beispiel 2: $LF_{weich} = 520\ \mu S/cm$, daraus ergibt sich $G_{LF,weich} = 4,33°dH$

Rohwasser C:

$LF_{roh}(C) = 300\ \mu S/cm$, $G_{LF,roh}(C) = 8°dH$

$LF_{weich,0}(C) = 320\ \mu S/cm$

Beispiel 1: $LF_{weich} = 315\ \mu S/cm$, daraus ergibt sich $G_{LF,weich} = 2°dH$

Beispiel 2: $LF_{weich} = 310\ \mu S/cm$, daraus ergibt sich $G_{LF,weich} = 4°dH$

Durch die Verwendung der erfindungsgemäßen zweiten Kennlinie zur Ermittlung der Gesamthärte des enthärteten Wassers, kann bei einer nicht optimalen Enthärtung des Wassers (Gesamthärte des Weichwassers > 0°) entweder die Einstellung des Verschneideventils angepasst werden oder das Ionentauschermaterial ausgewechselt oder regeneriert werden, so dass eine gleichbleibende Gesamthärte des Verschnittwassers gewährleistet wird.

**Bezugszeichenliste**

1: Wasserenthärtungsanlage
2: Zulauf
3: Ablauf
4: Steuerkopf
5: Ionentauschermaterial
6: Enthärtungsvorrichtung
7: Regeneriermittellösung
8: Vorratsgefäß
9: Verschneideventil
10: Stellmotor zur Steuerung des Verschneideventils
11: Leitfähigkeitssensor im Rohwasserbereich
12: Leitfähigkeitssensor im Bereich des enthärteten Wassers
13: Durchflussmesser zur Bestimmung des Teilstroms $V(t)_{teil1weich}$
14: Durchflussmesser zur Bestimmung des Teilstroms $V(t)_{teil2roh}$
15: Ventil für Regeneriermittellösung
16: Stellmotor zur Steuerung des Ventils für Regeneriermittellösung
17: Bypassleitung
18: elektronische Steuereinrichtung
19: Speicher für $K_{roh}$, $K_{weich}$, $LF_{weich,0}$, GW und SW
20: Eingabevorrichtung
21: Display
$LF_{weich}$: gemessene Leitfähigkeit im Bereich des enthärteten Wassers
$LF_{roh}$: gemessene Leitfähigkeit im Bereich des Rohwassers
$LF_{weich,0}$: Leitfähigkeit im Bereich des enthärteten Wassers bei vollständiger Enthärtung
$K_{roh}$: erste Kallbrierkennlinie zur Bestimmung der Gesamthärte des Rohwassers

$K_{weich}$: zweite Kalibrierkennlinie zur Bestimmung der Gesamthärte des enthärteten Wassers

$G_{LF,roh}$: Gesamthärte des Rohwassers, abgeleitet aus der gemessenen Leitfähigkeit des Rohwassers mit Hilfe der ersten Kalibrierkennlinie $K_{roh}$

$G_{LF,weich}$: Gesamthärte im Bereich des enthärteten Wassers, abgeleitet aus der gemessenen Leitfähigkeit im Bereich des enthärteten Wassers mit Hilfe der zweiten Kalibrierkennlinie $K_{weich}$

$V(t)_{teil1weich}$: enthärteter Teilstrom

$V(t)_{teil2roh}$: rohwasserführender Teilstrom in Bypassleitung

**Patentansprüche**

1. Verfahren zum Betrieb einer Wasserenthärtungsanlage mit
einer Enthärtungsvorrichtung (6) umfassend ein Ionentauschermaterial (5), einer automatisch verstellbaren Verschneideeinrichtung (9) zum Mischen eines Verschnittwasserstroms $V(t)_{verschnitt}$ aus einem ersten, enthärteten Teilstrom $V(t)_{teil1weich}$ und einem zweiten, rohwasserführenden Teilstrom $V(t)_{teil2roh}$,
einem ersten Leitfähigkeitssensor (11) im Rohwasserbereich,
einem zweiten Leitfähigkeitssensor (12) im Bereich des enthärteten Wassers, und
einer elektronischen Steuereinrichtung (18),
wobei das Verfahren folgende Schritte aufweist:

- Bestimmung der elektrischen Leitfähigkeit $LF_{roh}$ des Rohwassers mittels des ersten Leitfähigkeitssensors (11);
- Bestimmung einer Gesamthärte $G_{LF,roh}$ des Rohwassers aus der elektrischen Leitfähigkeit $LF_{roh}$ des Rohwassers mit einer in der elektronischen Steuereinrichtung (18) hinterlegten ersten Kalibrierkennlinie ($K_{roh}$),
- Bestimmung der elektrischen Leitfähigkeit $LF_{weich}$ des enthärteten Wassers mittels des zweiten Leitfähigkeitssensors (12),
- Bestimmung einer Gesamthärte $G_{LF,weich}$ des enthärteten Wassers aus der elektrischen Leitfähigkeit $LF_{weich}$ des enthärteten Wassers mit einer in der elektronischen Steuereinrichtung (18) hinterlegten zweiten Kalibrierkennlinie ($K_{weich}$) gemäß

$$G_{LF,weich} = G_{LF,roh} - \frac{G_{LF,roh}}{LF_{weich,0} - LF_{roh}} \bullet (LF_{weich} - LF_{roh}),$$

wobei $LF_{weich,0}$ die Leitfähigkeit im Bereich des enthärteten Wassers bei vollständiger Enthärtung ist,
- automatische Steuerung der Regeneration oder automatische Signalisierung der Erschöpfung des Ionentauschermaterials (5) und/oder automatische Steuerung der Verschneideeinrichtung (9) in Abhängigkeit der so bestimmten Gesamthärte $G_{LF,weich}$ des enthärteten Wassers, wobei bei der Steuerung der Verschneideeinrichtung die Teilströme $V(t)_{teil1weich}$, $V(t)_{teil2roh}$ in Abhängigkeit der Gesamthärten $G_{LF,roh}$, $G_{LF,weich}$ des Rohwassers und des enthärteten Wassers eingestellt werden, so dass die Wasserhärte im Verschnittwasserstrom $V(t)_{verschnitt}$ einen vorgegebenen Sollwert (SW) erreicht, wobei für die erste Kalibrierkennlinie ($K_{roh}$) gilt: $G_{LF,roh} = LF_{roh}/UFK$, und wobei ein Umrechnungsfaktor UFK von 35-44 µS/cm pro °dH, insbesondere 38-41 µS/cm pro °dH verwendet wird.

2. Verfahren nach Anspruch 1, **dadurch gekennzeichnet, dass** zur Bestimmung der Leitfähigkeit $LF_{weich,0}$ des vollständig enthärteten Wassers die elektrische Leitfähigkeit $LF_{weich}$ des enthärteten Wassers nach einer Regeneration oder nach einem Austausch des Ionentauschermaterials (5) zu einem Zeitpunkt gemessen wird, zu dem die volle Kapazität des Ionentauschermaterials (5) zur Verfügung steht, und dass diese gemessene Leitfähigkeit $LF_{weich}$ als Leitfähigkeit $LF_{weich,0}$ des vollständig enthärteten Wassers definiert wird.

3. Verfahren nach Anspruch 1, **dadurch gekennzeichnet, dass** zur Bestimmung der Leitfähigkeit $LF_{weich,0}$ des vollständig enthärteten Wassers in einem vorgegebenen Zeitraum eine Vielzahl von Werten für die elektrische Leitfähigkeit $LF_{weich}$ des enthärteten Wassers gemessen wird, wobei die Werte in einem Speicher (19) der elektronischen Steuereinrichtung (18) abgespeichert werden, und als Leitfähigkeit $LF_{weich,0}$ des vollständig enthärteten Wassers das Maximum der abgespeicherten Werte definiert wird.

4. Verfahren nach Anspruch 1, **dadurch gekennzeichnet,
dass** eine direkte oder indirekte Bestimmung der beiden Teilströme $V(t)_{teil1weich}$ und $V(t)_{teil2roh}$ mittels mindestens

zweier Durchflussmesser (13, 14) erfolgt,
und **dass** die Steuerung der Verschneideeinrichtung derart erfolgt, dass

$$SW\,(V(t)_{teil2roh} + V(t)_{teil1weich}) = G_{LF,weich}\,V(t)_{teil1weich} + G_{LF,roh}\,V(t)_{teil2roh}.$$

5. Verfahren nach einem der vorhergehenden Ansprüche, **dadurch gekennzeichnet, dass** die Regeneration des Ionentauschermaterials (5) gestartet oder die Erschöpfung des Ionentauschermaterials (5) signalisiert wird, wenn die Gesamthärte des enthärteten Wassers $G_{LF,weich}$ einen Grenzwert (GW) überschreitet.

6. Verfahren nach Anspruch 5, **dadurch gekennzeichnet, dass** der Grenzwert (GW) zwischen 0°dH und 2 °dH liegt.

7. Verfahren nach einem der vorhergehenden Ansprüche, **dadurch gekennzeichnet, dass** die Regeneration des Ionentauschermaterials (5) gestartet oder die Erschöpfung des Ionentauschermaterials (5) signalisiert wird, wenn die Leitfähigkeit $LF_{weich}$ des enthärteten Wassers abnimmt bei konstant bleibender Leitfähigkeit $LF_{roh}$ des Rohwassers.

8. Wasserenthärtungsanlage zur Durchführung des Verfahrens nach einem der vorhergehenden Ansprüche, umfassend
    eine Enthärtungsvorrichtung mit einem Ionentauschermaterial, insbesondere einem Ionentauscherharz,
    eine automatisch verstellbare Verschneideeinrichtung (9) zum Mischen eines Verschnittwasserstroms $V(t)_{verschnitt}$ aus einem ersten, enthärteten Teilstrom $V(t)_{teil1weich}$ und einem zweiten, rohwasserführenden Teilstrom $V(t)_{teil2roh}$,
    einen ersten Leitfähigkeitssensor (11) im Rohwasserbereich zur Bestimmung der elektrischen Leitfähigkeit $LF_{roh}$ des Rohwassers,
    einen zweiten Leitfähigkeitssensor (12) im Bereich des enthärteten Wassers zur Bestimmung der elektrischen Leitfähigkeit $LF_{weich}$ des enthärteten Wassers, und
    eine elektronische Steuereinrichtung (18) mit einem Speicher (19), in dem folgendes abgespeichert ist:

    eine erste Kennlinie ($K_{roh}$) zur Bestimmung der Gesamthärte $G_{LF,roh}$ des Rohwassers aus der elektrischen Leitfähigkeit $LF_{roh}$ des Rohwassers, und
    eine zweite Kennlinie ($K_{weich}$) gemäß

$$G_{LF,weich} = G_{LF,roh} - \frac{G_{LF,roh}}{LF_{weich,0} - LF_{roh}} \bullet (LF_{weich} - LF_{roh})$$

    zur Bestimmung der Gesamthärte $G_{LF,weich}$ des enthärteten Wassers, wobei $LF_{weich,0}$ die Leitfähigkeit im Bereich des enthärteten Wassers bei vollständiger Enthärtung ist,
    wobei die Steuereinrichtung dazu eingerichtet ist, in Abhängigkeit von der bestimmten Gesamthärte $G_{LF,weich}$ des enthärteten Wassers das Verschneideventil zu steuern und/oder die Regeneration des Ionentauschermaterials einzuleiten, und, wobei für die erste Kalibrierkennlinie (Kroh) gilt : $G_{LF,roh} = LF_{roh}/UFK$, und wobei ein Umrechnungsfaktor UFK von 35-44 $\mu$S/cm pro °dH, insbesondere 38-41 $\mu$S/cm pro °dH verwendet wird.

9. Wasserenthärtungsanlage nach Anspruch 8, **dadurch gekennzeichnet, dass** mindestens zwei Durchflussmesser (13, 14) zur direkten oder indirekten Bestimmung der beiden Teilströme $V(t)_{teil1weich}$ und $V(t)_{teil2roh}$ vorgesehen sind.

**Claims**

1. Method of operating a water softening system having
    a softening device (6) comprising an ion exchanger material (5), an automatically adjustable blending device (9) for mixing a blended water flow $V(t)_{blended}$ comprising a first softened partial flow $V(t)_{part1soft}$ and a second partial flow $V(t)_{part2untreated}$ which carries untreated water,
    a first conductivity sensor (11) in the untreated water area,
    a second conductivity sensor (12) in the area of the softened water, and an electronic control device (18),
    the method comprising the following steps:

- determining the electrical conductivity $LF_{untreated}$ of the untreated water by means of the first conductivity sensor (11),
- determining a total hardness $G_{LF,untreated}$ of the untreated water from the electrical conductivity $LF_{untreated}$ of the untreated water by means of a first calibration characteristic curve ($K_{untreated}$) stored in the electronic control device (18),
- determining the electrical conductivity $LF_{soft}$ of the softened water by means of the second conductivity sensor (12),
- determining an overall hardness $G_{LF,soft}$ of the softened water from the electrical conductivity $LF_{soft}$ of the softened water with a second calibration characteristic curve ($K_{soft}$) stored in the electronic control device (18) according to

$$G_{LF,soft} = G_{LF,untreated} - \frac{G_{LF,untreated}}{LF_{soft,0} - LF_{untreated}} \bullet \left(LF_{soft} - LF_{untreated}\right)$$

wherein $LF_{soft,0}$ is the conductivity in the area of the softened water in case of complete softening,
- automatic control of regeneration or automatic signalling of depletion of the ion exchanger material (5) and/or automatic control of the blending device (9) in dependence on the overall hardness $G_{LF,soft}$ of the softened water determined in this manner, wherein for controlling the blending device, the partial flows $V(t)_{part1soft}$, $V(t)_{part2untreated}$ are adjusted in dependence on the overall hardnesses $G_{LF,untreated}$, $G_{LF,soft}$ of the untreated water and the softened water such that the water hardness in the blended water flow $V(t)_{blended}$ reaches a predetermined desired value (SW), wherein the following applies for the first calibration characteristic curve (Kuntreated) : $G_{LF,untreated} = LF_{untreated}/UFK$ and wherein a conversion factor UFK of 35-44 $\mu$S/cm per °dH is used, in particular 38-41 $\mu$S/cm per °dH.

2. Method according to claim 1, **characterized in that** in order to determine the conductivity $LF_{soft,0}$ of the completely softened water, the electrical conductivity $LF_{soft}$ of the softened water is measured after regeneration or exchange of the ion exchanger material (5) at a time at which the full capacity of the ion exchanger material (5) is available and this measured conductivity $LF_{soft}$ is defined as conductivity $LF_{soft,0}$ of the completely softened water.

3. Method according to claim 1, **characterized in that** in order to determine the conductivity $LF_{soft,0}$ of the completely softened water within a predetermined time period a plurality of values of the electrical conductivity $LF_{soft}$ of the hardened water are measured, wherein the values are stored in a storage (19) of the electronic control device (18), the maximum of the stored values being defined as the conductivity $LF_{soft,0}$ of the completely softened water.

4. Method according to claim 1, **characterized in that** direct or indirect determination of the two partial flows $V(t)p_{art1soft}$ and $V(t)_{part2untreated}$ is realized by at least two flow meters (13, 14) and the blending device is controlled in such a manner that

$$SW\ (V(t)_{part2untreated} + V(t)_{part1soft}) = G_{LF,soft}\ V(t)_{part1soft} + G_{LF,untreated}\ V(t)_{part2untreated}.$$

5. Method according to any one of the preceding claims, **characterized in that** regeneration of the ion exchanger material (5) is started or depletion of the ion exchanger material (5) is signalled when the overall hardness of the softened water $G_{LFsoft}$ exceeds a threshold value (GW).

6. Method according to claim 5, **characterized in that** the threshold value (GW) is between 0°dH and 2°dH.

7. Method according to any one of the preceding claims, **characterized in that** regeneration of the ion exchanger material (5) is started or depletion of the ion exchanger material (5) is signalled when the conductivity $LF_{soft}$ of the softened water decreases while the conductivity $LF_{untreated}$ of the untreated water remains constant.

8. Water softening system for performing the method according to any one of the preceding claims, comprising
a softening device comprising an ion exchanger material, in particular, an ion exchanger resin,
an automatically adjustable blending device (9) for mixing a blended water flow $V(t)_{blended}$ comprising a first softened partial flow $V(t)_{partisoft}$ and a second partial flow $V(t)_{part2untreated}$ which carries untreated water, a first conductivity sensor (11) in the untreated water area for determining the electrical conductivity $LF_{untreated}$ of the untreated water, a second conductivity sensor (12) in the area of the softened water for determining the electrical conductivity $LF_{soft}$ of the softened water, and an electronic control device (18) with a memory (19) in which the following is stored:

a first characteristic curve ($K_{untreated}$) for determining the overall hardness $G_{LF,untreated}$ of the untreated water from the electrical conductivity $LF_{untreated}$ of the untreated water, and
a second characteristic curve ($K_{soft}$) according to

$$G_{LF,soft} = G_{LF,untreated} - \frac{G_{LF,untreated}}{LF_{soft,0} - LF_{untreated}} \bullet \left( LF_{soft} - LF_{untreated} \right)$$

for determining the overall hardness $G_{LF,soft}$ of the softened water,
wherein $LF_{soft,0}$ is the conductivity in the area of the softened water in case of complete softening,
wherein the control device is designed to control the blending valve in dependence on the determined overall hardness $G_{LF,soft}$ of the softened water and/or initiate regeneration of the ion exchanger material, and
wherein the following applies for the first calibration characteristic curve ($K_{untreated}$): $G_{LF,untreated}$ = $LF_{untreated}$/UFK, and wherein a conversion factor UFK of 35-44 $\mu$S/cm per °dH is used, in particular 38-41 $\mu$S/cm per °dH.

9. Water softening system according to claim 8, **characterized in that** at least two flow meters (13, 14) are provided for direct or indirect determination of the two partial flows $V(t)_{part1soft}$ and $V(t)_{part2untreated}$.

## Revendications

1. Procédé de fonctionnement d'une installation d'adoucissement d'eau avec
   un dispositif d'adoucissement (6) comprenant un matériau échangeur d'ions (5), un dispositif de coupage (9) à réglage automatique pour mélanger un courant d'eau de coupage $V(t)_{verschnitt}$ formé d'un premier courant partiel d'eau adoucie $V(t)_{teil1weich}$ et d'un deuxième courant partiel d'eau brute $V(t)_{teil2roh}$,
   un premier capteur de conductivité (11) dans la zone de l'eau brute,
   un deuxième capteur de conductivité (12) dans la zone de l'eau adoucie, et un dispositif de commande électronique (18),
   lequel procédé présente les étapes suivantes :

   - détermination de la conductivité électrique $LF_{roh}$ de l'eau brute au moyen du premier capteur de conductivité (11) ;
   - détermination d'une dureté totale $G_{LF,roh}$ de l'eau brute à partir de la conductivité électrique $LF_{roh}$ de l'eau brute avec une première caractéristique de calibrage ($K_{roh}$) stockée dans le dispositif de commande électronique (18),
   - détermination de la conductivité électrique $LF_{weich}$ de l'eau adoucie au moyen du deuxième capteur de conductivité (12),
   - détermination d'une dureté totale $G_{LF,weich}$ de l'eau adoucie à partir de la conductivité électrique $LFw_{eich}$ de l'eau adoucie avec une deuxième caractéristique de calibrage ($K_{weich}$) stockée dans le dispositif de commande électronique (18) selon

$$G_{LF,weich} = G_{LF,roh} - \frac{G_{LF,roh}}{LF_{weich,0} - LF_{roh}} \bullet \left( LF_{weich} - LF_{roh} \right),$$

   où $LF_{weich,0}$ est la conductivité dans la zone de l'eau adoucie en cas d'adoucissement complet,
   - commande automatique de la régénération ou signalisation automatique de l'épuisement du matériau échangeur d'ions (5) et/ou commande automatique du dispositif de coupage (9) en fonction de la dureté totale $G_{LF,weich}$ de l'eau adoucie ainsi déterminée,
   sachant que lors de la commande du dispositif de coupage, les courants partiels $V(t)_{teil1weich}$, $V(t)_{teil2roh}$ sont

réglés en fonction des duretés totales $G_{LF,roh}$, $G_{LF,weich}$ de l'eau brute et de l'eau adoucie de façon que la dureté de l'eau dans le courant d'eau de coupage $V(t)_{verschnitt}$ atteigne une valeur de consigne prédéfinie (SW), sachant qu'il s'applique pour la première caractéristique de calibrage ($K_{roh}$) : $G_{LF,roh} = LF_{roh}/UFK$, et qu'un facteur de conversion UFK de 35 à 44 $\mu$S/cm par °dH, en particulier de 38 à 41 $\mu$S/cm par °dH, est utilisé.

**2.** Procédé selon la revendication 1, **caractérisé en ce que** pour déterminer la conductivité $LF_{weich,0}$ de l'eau complètement adoucie, la conductivité électrique $LF_{weich}$ de l'eau adoucie est mesurée après une régénération ou après un remplacement du matériau échangeur d'ions (5), à un instant où la pleine capacité du matériau échangeur d'ions (5) est disponible, et que cette conductivité mesurée $LF_{weich}$ est définie comme conductivité $LF_{weich,0}$ de l'eau complètement adoucie.

**3.** Procédé selon la revendication 1, **caractérisé en ce que** pour déterminer la conductivité $LF_{weich,0}$ de l'eau complètement adoucie, une pluralité de valeurs de la conductivité électrique $LF_{weich}$ de l'eau adoucie est mesurée dans un intervalle de temps prédéfini, les valeurs étant enregistrées dans une mémoire (19) du dispositif de commande électronique (18) et le maximum des valeurs enregistrées étant défini comme conductivité $LF_{weich,0}$ de l'eau complètement adoucie.

**4.** Procédé selon une des revendications précédentes, **caractérisé en ce que** les deux courants partiels $V(t)_{teil1weich}$ et $V(t)_{teil2roh}$ sont déterminés directement ou indirectement au moyen d'au moins deux débitmètres (13, 14),
et **que** le dispositif de coupage est commandé de façon que

$$SW\,(V(t)_{teil2roh} + V(t)_{teil1weich}) = G_{LF,weich}\,V(t)_{teil1weich} + G_{LF,roh}\,V(t)_{teil2roh}.$$

**5.** Procédé selon une des revendications précédentes, **caractérisé en ce que** la régénération du matériau échangeur d'ions (5) est démarrée ou l'épuisement du matériau échangeur d'ions (5) signalé lorsque la dureté totale de l'eau adoucie $G_{LF,weich}$ dépasse une valeur limite (GW).

**6.** Procédé selon la revendication 5, **caractérisé en ce que** la valeur limite (GW) est comprise entre 0 °dH et 2 °dH.

**7.** Procédé selon une des revendications précédentes, **caractérisé en ce que** la régénération du matériau échangeur d'ions (5) est démarrée ou l'épuisement du matériau échangeur d'ions (5) signalé lorsque la conductivité $LF_{weich}$ de l'eau adoucie diminue alors que la conductivité $LF_{roh}$ de l'eau brute reste constante.

**8.** Installation d'adoucissement d'eau pour réaliser le procédé selon une des revendications précédentes, comprenant un dispositif d'adoucissement avec un matériau échangeur d'ions, en particulier une résine échangeuse d'ions, un dispositif de coupage (9) à réglage automatique pour mélanger un courant d'eau de coupage $V(t)_{verschnitt}$ formé d'un premier courant partiel d'eau adoucie $V(t)_{teil1weich}$ et d'un deuxième courant partiel d'eau brute $V(t)_{teil2roh}$, un premier capteur de conductivité (11) dans la zone de l'eau brute pour déterminer la conductivité électrique $LF_{roh}$ de l'eau brute, un deuxième capteur de conductivité (12) dans la zone de l'eau adoucie pour déterminer la conductivité électrique $LF_{weich}$ de l'eau adoucie, et un dispositif de commande électronique (18) avec une mémoire (19) dans laquelle sont enregistrées :

une première caractéristique ($K_{roh}$) pour déterminer la dureté totale $G_{LF,roh}$ de l'eau brute à partir de la conductivité électrique $LF_{roh}$ de l'eau brute, et
une deuxième caractéristique ($K_{weich}$) selon

$$G_{LF,weich} = G_{LF,roh} - \frac{G_{LF,roh}}{LF_{weich,0} - LF_{roh}} \bullet \left(LF_{weich} - LF_{roh}\right)$$

pour déterminer la dureté totale $G_{LF,weich}$ de l'eau adoucie, $LF_{weich,0}$ étant la conductivité dans la zone de l'eau adoucie en cas d'adoucissement complet,
sachant que le dispositif de commande est conçu pour commander la vanne de coupage et/ou déclencher la régénération du matériau échangeur d'ions en fonction de la dureté totale $G_{LF,weich}$ déterminée de l'eau adoucie, et

sachant qu'il s'applique pour la première caractéristique de calibrage ($K_{roh}$) : $G_{LF,roh} = LF_{roh}/UFK$, et qu'un facteur de conversion UFK de 35 à 44 $\mu$S/cm par °dH, en particulier de 38 à 41 $\mu$S/cm par °dH, est utilisé.

9. Installation d'adoucissement d'eau selon la revendication 8, **caractérisée en ce qu'**au moins deux débitmètres (13, 14) pour la détermination directe ou indirecte des deux courants partiels $V(t)_{teil1weich}$ et $V(t)_{teil2roh}$ sont prévus.

Fig. 1

Fig. 2

EP 2 481 713 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007059058 B3
- EP 0900765 A2
- DE 102009047254